# EUROPEAN PATENT SPECIFICATION

(11) **EP 4 450 303 B1**
(45) Date of publication and mention of the grant of the patent: **11.06.2025**
(21) Application number: 23168541.3
(22) Date of filing: 18.04.2023
(51) Int. Cl.: B60C 23/00, B62D 61/12, B60T 13/26, B60T 13/40, B60T 15/36

(54) **AN AIR SUPPLY CONTROL ARRANGEMENT FOR A HEAVY-DUTY VEHICLE COMPRISING A LIFT AXLE**
LUFTZUFUHRSTEUERUNGSANORDNUNG FÜR EIN SCHWERLASTFAHRZEUG MIT EINER LIFTACHSE
AGENCEMENT DE COMMANDE D'ALIMENTATION EN AIR POUR VÉHICULE UTILITAIRE LOURD COMPRENANT UN ESSIEU RELEVABLE

(43) Date of publication of application: 23.10.2024
(73) Proprietor: VOLVO TRUCK CORPORATION, 405 08 Göteborg (SE)
(72) Inventor: JEYAKAR M R, Amarnath, 560075 Bangalore (IN); ANGADI, Sunil, 580004 Dharwad (IN); KUMAR, Dilip, 560061 Bengaluru (IN)
(74) Representative: Zacco Sweden AB

(56) References cited:
- EP-A1- 2 366 562
- US-A1- 2022 088 976
- US-B2- 8 935 054
- US-B2- 9 579 937

## Description

### TECHNICAL FIELD

The invention relates generally to an air supply control arrangement. In particular aspects, the invention relates to an air supply control arrangement for a heavy duty vehicle comprising a lift axle. This invention also relates to a method of controlling air supply to a brake chamber of a lift axle. The invention can be applied in heavy-duty vehicles, such as trucks, buses, and construction equipment. Although the invention may be described with respect to a particular vehicle, the invention is not restricted to any particular vehicle.

### BACKGROUND

A heavy-duty vehicle may be equipped with a lift axle that can be raised so that its tires do not touch the road surface, for example when driving without any cargo. When the vehicle is heavily loaded, the lift axle can be lowered so that the tires of the lift axle assist in supporting the heavy weight. Being able to raise the lift axle when not needed for load support improves fuel/battery economy. In existing systems, when brakes are applied, the service brakes are normally activated for all axles, including the lift axle, irrespective of if it is in its lifted condition or in its ride condition. Due to this, the consumption of the pressurized air used for braking is increased in each brake cycle. This leads to increase of the compressor duty cycle. For battery electric vehicles this will also reduce the drive range. Document US 2022/088976 A1 shows and describes in fig. 25 an air supply control arrangement for a heavy-duty vehicle.

### SUMMARY

According to a first aspect of the invention there is provided an air supply control arrangement for a heavy-duty vehicle comprising a lift axle which comprises a brake chamber, the air supply control arrangement comprising:
- a valve configured to be arranged in an air supply passage that enables pressurized air to be supplied from a pressurized air source to a brake chamber of a lift axle of a heavy-duty vehicle, the valve having a closed first state in which pressurized air along the air supply passage is blocked by the valve and an open second state in which pressurized air is allowed to pass through the valve along the air supply passage,
- a processing circuitry configured to receive, from a pressure sensor, measurement values of the pressure inside a tire of the lift axle,
wherein the processing circuitry is configured to, based on the received measurement values, determine whether the lift axle is in its raised lift condition or in its lowered ride condition, wherein the processing circuitry is configured to control the valve to move to the closed first state upon determination that the lift axle has been raised from its ride condition to its lift condition. The first aspect of the disclosure may seek to avoid unnecessary braking of the wheels of the lift axle, and thus reduce unnecessary consumption of pressurized air. A technical benefit may include that the brakes of the lift axle do not need to become engaged when the wheels and tires of the lift axle are lifted and thus do not contribute to the travelling motion of the vehicle. However, when the lift axle is in its ride condition, the brakes may be engaged again. When the air supply control arrangement is installed on a vehicle, and the processing circuitry is in operative communication with the pressure sensor, an automatic controlling of the valve may be achieved based on the lift axle condition. By using information from a pressure sensor, a simple yet effective switching between the two states of the valve may be achieved. The inventors have realized that because the pressure in the tires of the lift axle will, due to the load of the vehicle, normally be higher when the lift axle is in its lowered ride condition, compared to when it is in its raised lift condition, pressure measurement values may be used for determining the present condition of the lift axle, and thus, based on such determination, the air supply to the brake chamber may be controlled to avoid unnecessary consumption of pressurized air.

It should be understood that although the present invention will, for convenience, mainly discuss brake chamber, tire, pressure sensor in singular form, it should be understood that the teachings of the present invention are fully implementable for plural forms. In particular, the teachings of the present invention may advantageously be implemented for both a left tire and a right tire of the lift axle, each one having a respective associated pressure sensor providing measurement values to the processing circuitry, and each one being associated with a respective brake chamber to which the supply of the pressurized air may be controlled.

Optionally, in some examples, including in at least one preferred example, the processing circuitry is further configured to compare the received measurement value with a predefined pressure value, wherein the processing circuitry is configured to control the valve to move to the closed first state upon determination that the lift axle is in a raised lift condition, wherein the processing circuitry is configured to determine that the lift axle is in its lift condition when the received measurement values are lower than said predefined pressure value. A technical benefit may include that this provides a simple and straightforward determination of whether or not the lift axle is in the lift condition. By setting a predefined pressure value, which functions as a threshold, measurement values that are lower than said threshold can be conveniently identified and may be considered as indicative of the lift axle being in lift condition (under the presumption that there is no load or less load on the tires when the lift axle is in the lift condition compared to when the lift axle is in the ride condition). The predefined pressure value may be set differently/individually for different types of vehicles, and may suitably be done by collecting data from initially performed pressure measurements in both the lift condition and the ride condition.

Optionally, in some examples, including in at least one preferred example, when the lift axle is in a lowered ride condition, the measurement values vary in an oscillating manner due to the rotation of the tire, wherein the processing circuitry is configured to determine a pressure oscillation amplitude based on said received measurement values, wherein the processing circuitry is further configured to compare the determined pressure oscillation amplitude with a predefined amplitude value, wherein the processing circuitry is configured to control the valve to move to the closed first state upon determination that the lift axle is in a raised lift condition, wherein the processing circuitry is configured to determine that the lift axle is in its lift condition when the determined pressure oscillation amplitude is lower than the predefined amplitude value. A technical benefit may include that, in the event of a puncture or similar leakage, the pressure in the tire will be reduced, and might make it difficult to determine the current condition of the lift axle relying purely on the magnitude of the measured values. Nevertheless, if the lift axle is in its ride condition there will, even with a puncture, be pressure oscillations due to the rotation of the tire, whereas when the lift axle is in its lift condition and the tires are idle, there will be no or very little pressure oscillations.

Optionally, in some examples, including in at least one preferred example, when the lift axle is in a lowered ride condition, the measurement values vary in an oscillating manner due to the rotation of the tire, wherein the processing circuitry is configured to determine a pressure oscillation amplitude based on said received measurement values, wherein the processing circuitry is further configured to:
- compare the received measurement values with a predefined pressure value, and
- compare the determined pressure oscillation amplitude with a predefined amplitude value,
wherein the processing circuitry is configured to control the valve to move to the closed first state upon determination that the lift axle is in a raised lift condition, wherein the processing circuitry is configured to determine that the lift axle is in its lift condition when the received measurement values are lower than said predefined pressure value simultaneously with the determined pressure oscillation amplitude being lower than the predefined amplitude value A technical benefit may include that by making two comparisons a redundancy is provided, which increases the reliability of the determination of whether the lift axle is in its lift condition or not. This is desirable, because a false determination that the lift axle is in its lift axle when it is actually in its ride condition, with ensuing prevention of pressurized air supply to the brake chamber, may result in a hazardous situation as the braking capacity would be reduced.

Optionally, in some examples, including in at least one preferred example, the air supply control arrangement may comprise an electronically controlled brake valve device, which when opened allows pressurized air received in the electronically controlled brake valve device to be passed to the brake chamber, and when closed prevents pressurized air received in the electronically controlled brake valve device from being passed to the brake chamber, wherein the degree of the opening and/or the duration of the opening of the electronically controlled brake valve device is controlled by an electronic brake request received by the electronically controlled brake valve device. A technical benefit may include that such an electronically controlled brake valve device provides an efficient way of transmitting a brake request from a driver to the brake chamber.

Optionally, in some examples, including in at least one preferred example, said valve forms part of said electronically controlled brake valve device. A technical benefit may include that, in this example, there is no need to provide a separate valve for preventing the supply of pressurized air to the brake chamber when the lift axle is in its lift condition. Thus, the electronically controlled brake valve device may be appropriately configured to receive instructions form the processing circuitry to prevent pressurized air to be supplied to the brake chamber when the processing circuitry has determined that the lift axle is in its lift condition. In this way, even though the driver applies the brakes of the vehicles, issuing a brake request to the electronically controlled brake valve device, there will be no pressurized air supplied to the brake chamber if the lift axle is in its lift condition.

Optionally, in some examples, including in at least one preferred example, the air supply control arrangement may further comprise:
- a supply passage,
- a pressurized air source for supplying pressurized air to the electronically controlled brake valve device along said supply passage,
wherein said valve is provided in said supply passage between the pressurized air source and the electronically controlled brake valve device.
A technical benefit may include that, even though the driver applies the brakes of the vehicle, e.g. pressing the foot brake pedal, there will be no braking action on the lift axle if the valve is in its closed first state, i.e. if the lift axle is in its lifted condition. Hereby, pressurized air is not wasted on braking the lift axle when it is in its lifted condition. When a driver presses the foot brake pedal an electronic brake request may be sent to the electronically controlled brake valve device (e.g. from a foot brake modulator translating the movement of the foot brake pedal into an electric signal to the brake valve device). The electronically controlled brake valve device will therefore open in line with the received electronic brake request, but there will be no braking action if the valve is in its closed first state, i.e. if the lift axle is in its lifted condition. Thus, when the valve is in the open second state and the electronically controlled brake valve device receives an electronic brake request, then pressurized air is allowed to be passed to the brake chamber, whereas when the valve is in the closed first state and the electronically controlled brake valve device receives an electronic brake request, the valve blocks pressurized air from the pressurized air source from reaching the electronically controlled brake valve device.

Optionally, in some examples, including in at least one preferred example, the air supply control arrangement may further comprise:
- a spring device configured to bias the valve towards said open second state, such that in case of pressure monitoring failure, the valve automatically allows pressurized air to be supplied to the electronically controlled brake valve device. A technical benefit may include, that by providing a spring device, as long as the pressure monitoring (pressure measurements and the transfer of information of the pressure measurements to the processing circuitry) is functional the valve can work as intended, however, if the processing circuitry for some reason does not receive any input from the pressure sensor, e.g. due to malfunctioning pressure sensor, the spring device can move the valve to the open second state.

Optionally, in some examples, including in at least one preferred example, the valve is a solenoid valve actuated by an electronic signal from the processing circuitry. A technical benefit may include that a solenoid valve may be efficiently controlled by electronic signals, without requiring any additional mechanical control.

In some examples, including in at least one preferred example, optionally said valve and the processing circuitry form an integrated unit installable as one part of the air supply control arrangement. A technical benefit may include that it facilitates installation of the air supply control arrangement.

This invention includes electronics and electronic instructions for implementing the arrangement and processes described herein, which may be embodied and/or collectively described as a processing circuitry. The processing circuitry may include electrical switches that are triggered by electrical signals, such as voltage signals, to become closed, and/or may include electrical switches that are triggered by electrical signals, such as voltage signals, to become opened. The processing circuitry unit may include a microprocessor, microcontroller, programmable digital signal processor, computer, or another programmable device. The processing circuitry may also, or instead, include an application specific integrated circuit, a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device as disclosed herein.

Optionally, in some examples, including in at least one preferred example, the processing circuitry may comprise a first switch which is normally open, and a second switch which is normally open, wherein the first switch and second switch are connected in series to the valve, wherein when said measurement values are lower than said predefined pressure value a first voltage signal is generated and closes the first switch, and when the determined pressure oscillation amplitude is lower than the predefined amplitude value a second voltage signal is generated and closes the second switch, wherein when both the first switch and the second switch are closed, the valve is energized and moves to the closed first state. A technical benefit may include that, by connecting the first switch and the second switch in series with the valve, both switches need to be closed to energize the valve, thereby providing redundancy and an additional level of safety. The valve in this case may, for example, be a solenoid valve.

Optionally, in some examples, including in at least one preferred example, the air supply control arrangement may further comprise said pressure sensor, from which the processing circuitry receives said measurement values. A technical benefit may include that the processing circuitry and the pressure sensor may be operatively fine-tuned for improved communication. However, it should be understood that in other examples the pressure sensor does not need to be part of the air supply control arrangement, and in such cases the air supply control arrangement may be retrofitted to a vehicle which is already provided with a pressure sensor that measures tire pressure at the lift axle.

According to a second aspect of the invention, there is provided a vehicle comprising the air supply control arrangement according to the first aspect, including any example thereof. The second aspect of the invention may, similarly to the first aspect seek to avoid unnecessary braking of the wheels of the lift axle, and thus reduce unnecessary consumption of pressurized air. A technical benefit may include that the brakes of the lift axle do not need to become engaged when the wheels and tires of the lift axle are lifted and thus do not contribute to the travelling motion of the vehicle.

According to a third aspect of the invention, there is provided a method of controlling air supply to a brake chamber of a lift axle of a heavy-duty vehicle, the method comprising:
- monitoring the pressure inside a tire of the lift axle,
- determining, based on the monitored pressure, whether the lift axle is in its raised lift condition or in its lowered ride condition, and
- controlling, upon determination that the lift axle is in its raised lift condition, a valve to be closed so as to prevent pressurized air from being supplied from a pressurized air source to the brake chamber.
The third aspect of the invention may, similarly to the first and second aspects seek to avoid unnecessary braking of the wheels of the lift axle, and thus reduce unnecessary consumption of pressurized air. A technical benefit may include that the brakes of the lift axle do not need to become engaged when the wheels and tires of the lift axle are lifted and thus do not contribute to the travelling motion of the vehicle.

Optionally, in some examples, including in at least one preferred example, the method may further comprise:
- receiving, from a pressure sensor, measurement values of the pressure inside a tire of the lift axle, wherein when the lift axle is in a lowered ride condition the measurement values vary in an oscillating manner due to the rotation of the tire,
- determining a pressure oscillation amplitude based on said received measurement values,
- comparing the received measurement values with a predefined pressure value,
- comparing the determined pressure oscillation amplitude with a predefined amplitude value,
- determining that the lift axle is in its lift condition when the received measurement values are lower than said predefined pressure value simultaneously with the determined pressure oscillation amplitude being lower than the predefined amplitude value, and
- controlling the valve to be closed upon determination that the lift axle is in its raised lift condition.
Technical benefits may correspond to those discussed in relation to the first aspect, including any example thereof. The method of the third aspect, including any example thereof, may be fully or partly performed by a processing circuitry, such as a processing circuitry of the air supply control arrangement of the first aspect, including any example thereof.

According to a fourth aspect of this invention, there is provided an air supply control arrangement for a heavy-duty vehicle comprising a lift axle which comprises a brake chamber, the air supply control arrangement comprising:
- a valve configured to be arranged in an air supply passage that enables pressurized air to be supplied from a pressurized air source to a brake chamber of a lift axle of a heavy-duty vehicle, the valve having a closed first state in which pressurized air along the air supply passage is blocked by the valve and an open second state in which pressurized air is allowed to pass through the valve along the air supply passage,
- a processing circuitry configured to receive, from a pressure sensor, measurement values of the pressure inside a tire of the lift axle, wherein when the lift axle is in a lowered ride condition the measurement values vary in an oscillating manner due to the rotation of the tire, wherein the processing circuitry is configured to determine a pressure oscillation amplitude based on said received measurement values,

wherein the processing circuitry is further configured to:
   - compare the received measurement values with a predefined pressure value, and
   - compare the determined pressure oscillation amplitude with a predefined amplitude value,
wherein the processing circuitry is configured to control the valve to move to the closed first state upon determination that the lift axle has been raised from its ride condition to its lift condition, wherein the processing circuitry is configured to determine that the lift axle is in its lift condition when the received measurement values are lower than said predefined pressure value simultaneously with the determined pressure oscillation amplitude being lower than the predefined amplitude value. Technical benefits may include those discussed in connection with the first aspect, including any example thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art.

### BRIEF DESCRIPTION OF THE DRAWINGS

Examples are described in more detail below with reference to the appended drawings.
**FIG. 1** schematically illustrates a vehicle according to one example of this invention.
**FIGS. 2A-2B** schematically illustrate different conditions of a lift axle.
**FIG. 3** schematically illustrates how pressure measurement values for a tire of a lift axle may vary when a vehicle is travelling with the lift axle in a ride condition.
**FIGS. 4A-4B** schematically illustrates components of an air supply control arrangement according to one example of this invention, wherein a valve is presented in two different states.
**FIGS. 5A-5B** schematically illustrates two electronic switches connected in series with a valve.
**FIG. 6** schematically illustrates an air supply control arrangement according to at least one example of this invention.
**FIGS. 7A-7B** schematically illustrates methods according to at least some examples of this invention.
**FIG. 8** schematically illustrates an air supply control arrangement according to at least yet another example of this invention.

### DETAILED DESCRIPTION

The detailed description set forth below provides information and examples of the disclosed technology with sufficient detail to enable those skilled in the art to practice the invention.

The present invention teaches that consumption of the pressurized air used for braking may be saved when the lift axle is in its lift condition. This leads to decrease of the compressor duty cycle. For battery electric vehicles this will also increase the drive range.

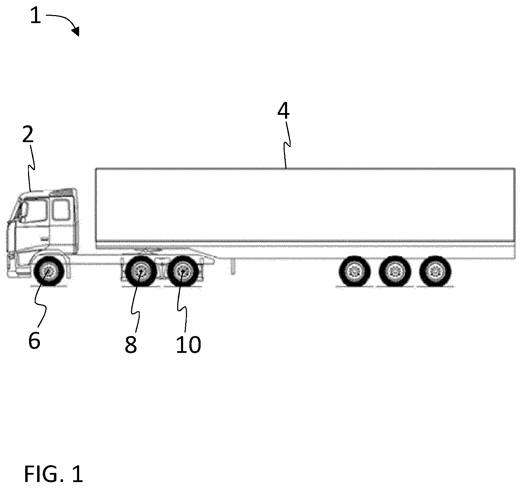

**FIG. 1** schematically illustrates a vehicle 1 according to one example of this invention More specifically, the illustrated vehicle 1 is a heavy-duty vehicle combination which comprises a tractor unit 2 and a trailer unit 4. The tractor unit 2 has three wheel axles 6, 8, 10, each one of the wheel axles 6, 8 , 10 having at least one left wheel and at least one right wheel. In this example, the tractor unit 2 has a front axle 6 and two rear axles 8, 10. One of the rear axles 8, 10 may be a lift axle. For example, the two rear axles 8, 10 may be configured such that the lift axle is a pusher axle 8 in front of a drive axle 10. In other examples, the two rear axles 8, 10 may be configured such that the lift axle is a tag axle 10 behind a drive axle 8. It should be understood that the teachings of this invention may be implemented for any lift axle, irrespective of its location. Indeed, the teachings of this invention are not limited to lift axles on tractor units, but may be implemented for lift axles on trailer units as well, such as full trailers or semi-trailers. Additionally, the teachings of the present invention is not limited to a particular vehicle propulsion system, i.e., the teachings herein may be implemented for vehicles propelled by internal combustion engines, traction batteries, fuel cells, hybrid systems, etc. Furthermore, the teachings of the present invention may be implemented for driver-operated vehicles and for autonomous (self-driving) vehicles.

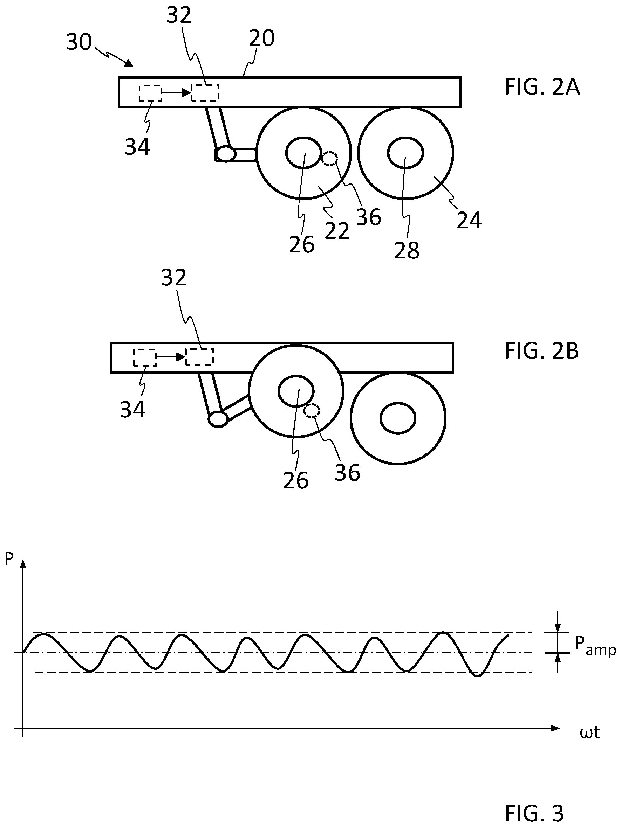

**FIGS. 2A-2B** schematically illustrate different conditions of a lift axle. Starting with **FIG. 2A****,** there is schematically illustrated a part of a chassis 20 of a vehicle, for example the vehicle 1 in **FIG. 1** or another vehicle. Two left wheels that carry tires 22, 24 are illustrated, each wheel being mounted to a respective wheel axle 26, 28. In this example, the rearmost axle 28 may be drive axle, while the other one is a lift axle 26. In **FIG. 2A** the lift axle 26 is in its lowered ride condition. Thus, the tires 22, 24 of both the lift axle 26 and the drive axle 28 are in contact with the ground, contributing to carrying the load of the vehicle.

In **FIG. 2A****,** an air supply control arrangement 30 is schematically indicated. The air supply control arrangement 30 comprises a valve 32. **FIG. 2A** just indicates very schematically a valve 32. A more detailed example of a valve will be discussed in relation to other drawing figures. In **FIG. 2A****,** the air supply control arrangement 30 also comprises a processing circuitry 34. A pressure sensor 36 is in the tire 22 of the lift axle 26. The processing circuitry 34 is configured to receive, from the pressure sensor 36, measurement values of the pressure inside the tire 22 of the lift axle 26. The pressure sensor 36 may suitably communicate the measurement values wirelessly, however, wired communication is also conceivable. Based on the received measurement values, the processing circuitry 34 whether the lift axle 26 is in its raised lift condition or in its lowered ride condition. The processing circuitry 34 is further configured to control the valve 32 to move to a closed first state upon determination that the lift axle 26 has been raised from its ride condition to its lift condition, which lift condition will now be discussed in relation to **FIG. 2B****.**

Turning now to **FIG. 2B****,** the lift axle 26 is now show in its lift condition, thus not contributing to supporting the vehicle load. The lift axle 26 may, for instance, be provided in this lift condition, when the vehicle does not carry any considerable weight, whereby ground friction is reduced by lifting the lift axle 26. When the lift axle 26 is in this lift condition, the tire 22 is subjected to less load (or even no load) compared to when the lift axle 26 is in the ride condition. This in turn means that the pressure inside the tire 22 will be lower in this lift condition **(****FIG. 2B****)** compared to in the ride condition **(****FIG. 2A****)** of the lift axle 26. The processing circuitry 34 will based on the received measurement values determine which is the current condition of the lift axle 26.

Although not illustrate in **FIGS. 2A** and **2B** (but which will be discussed in more detail in connection with other drawing figures), the lift axle 26 comprises a brake chamber which may receive pressurized air upon a brake request, whereby a frictional force is applied to an associated wheel (such as to a brake disc or to a brake drum of the wheel). However, according to the present invention, the pressurized air may be prevented from being supplied to the brake chamber when the lift axle 26 is in the lift condition, thereby avoiding unnecessary air and energy consumption. The valve 32 is configured to be arranged in an air supply passage that enables pressurized air to be supplied from a pressurized air source to the brake chamber. The valve 32 has a closed first state in which pressurized air along the air supply passage is blocked by the valve 32 and an open second state in which pressurized air is allowed to pass through the valve 32 along the air supply passage. The processing circuitry 34 is configured to control the valve 32 to move to the closed first state upon determination that the lift axle 26 has been raised from its ride condition **(****FIG. 2A****)** to its lift condition **(****FIG. 2B****).**

**FIG. 3** schematically illustrates how pressure measurement values for a tire of a lift axle may vary when a vehicle is travelling with the lift axle in a ride condition. In particular, **FIG. 3** schematically illustrates how the pressure P in the tire of the lift axle may vary in relation to the angular distance ωt travelled by the tire (where ω is the angular speed of the tire, and t is elapsed time). The processing circuitry (such as the processing circuitry 34 in **FIGS. 2A-2B****)** may be configured to compare the received measurement values with a predefined pressure value. As long as the received measurement values are above the predefined pressure value, the processing circuitry may interpret this as the lift axle being in the ride condition. However, when the measurement values fall below the predefined pressure value, the processing circuitry may interpret this as the lift axle being raised to the lift condition. As illustrated in **FIG. 3****,** when the lift axle is in the ride condition the measurement values will vary in an oscillating manner due to the rotation of the tire. In the lift condition, with the tire being substantially idle, there will be no or just very small oscillations. The processing circuitry may therefore be configured to determine a pressure oscillation amplitude Pₐₘₚ based on said received measurement values and compare it with a predefined amplitude value. As long as the determined pressure oscillation amplitude Pₐₘₚ is larger than the predefined amplitude value, the processing circuitry may interpret this as the lift axle being in the ride condition. However, when the determined pressure oscillation amplitude Pₐₘₚ falls below the predefined amplitude value, the processing circuitry may interpret this as the lift axle being raised to the lift condition. As an additional measure of safety, the processing circuitry may suitably be configured to perform both of the above discussed comparisons. Such redundancy avoids incorrect interpretation in case of for example an air leakage in ride condition, in which case the pressure measurement values may fall below the predefined pressure value (which could be interpreted as lift condition), but because there will still be oscillations, the result of the amplitude comparison will correctly be interpreted as the ride condition. Thus, when using such redundancy, the results of both comparisons should be indicative of the lift axle being in the lift condition before the processing circuitry controls the valve to prevent pressurized air supply to the brake chamber. Hereby, the risk of inadvertently disabling the braking functionality when the lift axle is in the ride condition is reduced. The measurement values may suitably be received by the processing circuitry in a continuous manner from the pressure sensor, although discrete/intermittent informational transfer is also conceivable.

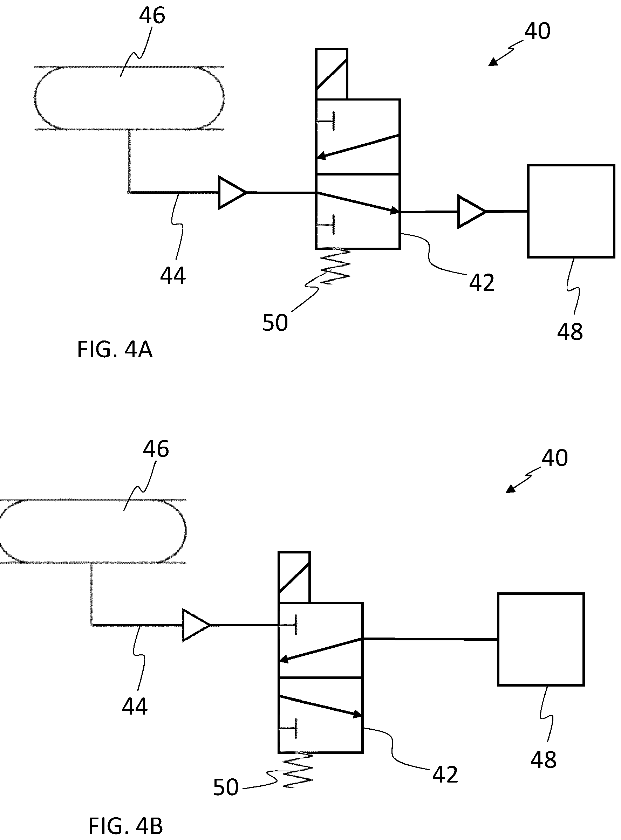

**FIGS. 4A-4B** schematically illustrates components of an air supply control arrangement 40 according to one example of this invention, wherein a valve 42 is presented in two different states. **FIGS. 4A** and **4B** may, for instance, illustrate different states which correspond to the states of the valve 32 illustrated in **FIGS. 2A** and **2B****,** respectively. Thus, **FIG. 4A** illustrates the open second state when the lift axle is in its ride condition, while **FIG. 4B** illustrates the closed first state when the lift axle is in its lift condition.

Starting with **FIG. 4A****,** the air supply control arrangement 40 is intended to be used for a heavy-duty vehicle comprising a lift axle, which lift axle comprises a brake chamber (lift axle and brake chamber not illustrated in **FIG. 4A****).** The air supply control arrangement 40 comprises said valve 42 configured to be arranged in an air supply passage 44 that enables pressurized air to be supplied from a pressurized air source 46 to the brake chamber of the lift axle. In **FIG. 4A** the pressurized air source 46 is illustrated in the form of a tank containing pressurized air. The tank may, for instance, become pressurized by means of a compressor. This invention is, however, not limited to using the air supply control arrangement 40 in connection with a specific type of pressurized air source 46. Indeed, in at least some examples, the pressurized air source 46 is not part of the actual air supply control arrangement 40, but merely forms part of the environment in which the air supply control arrangement 40 is to be installed and operated. In other examples, it may however be conceivable to include a pressurized air source 46 as part of the air supply control arrangement. Although not illustrated, the air supply control arrangement 40 also comprises a processing circuitry (such as indicated by the processing circuitry 34 in **FIGS. 2A-2B****)** configured to control the state of the valve 42, in line with the previous discussions. The air supply control arrangement 40 may, optionally, further comprise an electronically controlled brake valve device 48. The electronically controlled brake valve device 48 may receive pressurized air via the valve 42. When the electronically controlled brake valve device 48 is opened, it allows received pressurized air to be passed to the brake chamber. Thus, the electronically controlled brake valve device 48 may be positioned between the valve 42 and the brake chamber with respect to the direction of flow of pressurized air. When the electronically controlled brake valve device 48 is closed, it prevents any received pressurized air from being passed to the brake chamber. The degree of the opening and/or the duration of the opening of the electronically controlled brake valve device 48 may be controlled by an electronic brake request received by the electronically controlled brake valve device 48.

As can be seen in **FIGS. 4A** and **4B****,** the valve 42 is open in **FIG. 4A** allowing pressurized air to pass through the valve 42 along the air supply passage 44, and the valve 42 is closed in **FIG. 4B****,** preventing pressurized air to pass through the valve 42 along the air supply passage 44. The closed state in **FIG. 4B** represents an example of a closed first state of the valve 42, which has been discussed elsewhere in this disclosure. The open state in **FIG. 4A** represents an open second state of the valve 42, which has also been discussed elsewhere in this disclosure.

As can be understood, when the valve 42 is in the closed first state **(****FIG. 4B****),** pressurized air is prevented from reaching the electronically controlled brake valve device 48, irrespectively or the latter being opened or closed, and thus pressurized air is prevented from reaching the brake chamber of the lift axle. Thus, even though a brake request has been made, the brake chamber of the lift axle will not receive any pressurized air and the brakes of the lift axle will not be activated. Other brake chambers associated with other axles having tires in contact with the road, will still be allowed to receive pressurized air so that the associated brakes become activated.

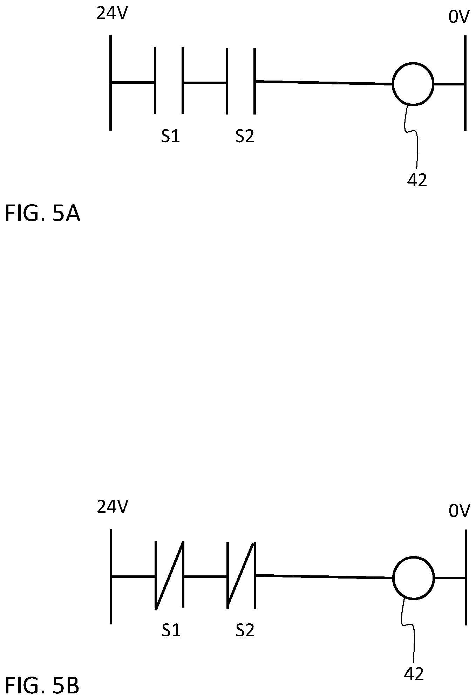

**FIGS. 5A-5B** schematically illustrates two electronic switches S1, S2 connected in series with a valve 42, such as the valve 42 illustrated in **FIGS. 4A-4B****.** As mentioned before in connection with the discussion of **FIG. 3****,** for additional safety, the processing circuitry may suitably be configured to determine that the lift axle is in its lift condition when two requirements are simultaneously satisfied. In particular, the processing circuitry may be configured such that it only determines that the lift axle is in the lift condition when both of the previously discussed comparisons indicate that this is indeed the case. A possible way of implementing this is shown in **FIGS. 5A** and **5B****.** The processing circuitry may comprise said first switch S1, which is normally open, and said second switch S2, which is also normally open. This is illustrated in **FIG. 5A****.** Thus, electric current does not pass through the open switches S1 and S2. The first switch S1 and the second switch S2 are connected in series to the valve 42. This means that as long as at least one of the switches S1, S2 is open, electric current will not be allowed to pass via the switches S1, S2 to the valve 42.

When the measurement values are lower than said predefined pressure value, the processing circuitry generates a first voltage signal which closes the first switch S1. When the determined pressure oscillation amplitude Pₐₘₚ is lower than the predefined amplitude value the processing circuitry generates a second voltage signal which closes the second switch S2. When both the first switch S1 and the second switch S2 are closed **(****FIG. 5B****),** electricity is allowed to be supplied to the valve 42, and electrical energy may (in case of a solenoid valve) be converted into mechanical energy, thereby physically moving the valve 42 to the closed first state (e.g. as illustrated in **FIG. 4B****).** Pressurized air is thus prevented from being supplied to the brake chamber. As mentioned, the valve 42 may suitably be a solenoid valve. As also mentioned, when at least one of the switches S1, S2 is open, or when both switches S1, S2 are open **(****FIG. 5A****)** the voltage signal does not reach the valve 42, which is therefore not energized, wherefore the valve 42 will stay in, or move to, the open second state **(****FIG. 4A****).** In this state, the valve 42 does not prevent pressurized air from passing through the valve 42.

As can be seen in **FIGS. 4A** and **4B****,** the air supply control arrangement 40 may suitably comprise a spring device 50 which is configured to bias the valve 42 towards the open second state **(****FIG. 4A****).** Thus, in case of pressure monitoring failure, the valve 42 will automatically allow pressurized air to be supplied to the electronically controlled brake valve device 48. In case of the valve 42 being a solenoid valve, when it becomes energized, it should be with sufficient force to overcome the spring force, thus, allowing to the valve 42 to move to the closed first state **(****FIG. 4B****).**

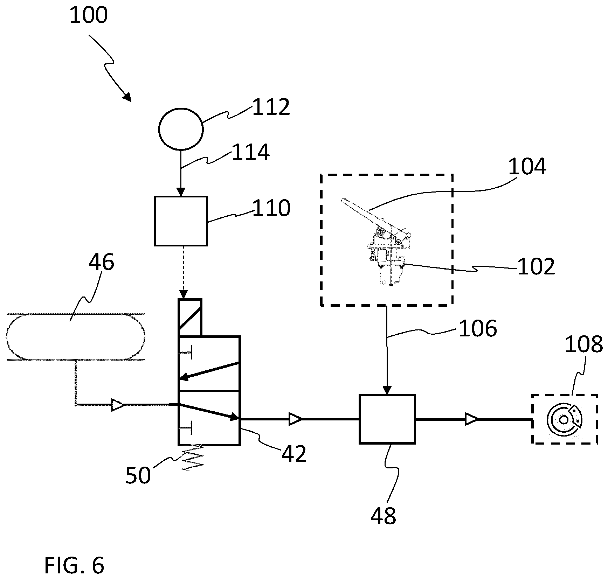

**FIG. 6** schematically illustrates an air supply control arrangement 100 according to at least one example of this invention. In particular, **FIG. 6** schematically illustrates an air supply control arrangement 100 according to one example of this invention and its relation to certain brake components. As illustrated in **FIG. 6****,** the air supply control arrangement 100 may comprise the valve 42 exemplified in **FIGS. 4A-4B****.** However, in other examples, another valve may be used instead.

The air supply control arrangement 100 in **FIG. 6** may further comprise an electronically controlled brake valve device 48. The electronically controlled brake valve device 48 may be controlled by a foot brake modulator 102 which translates the movements of a foot brake pedal 104 into a brake request 106. Thus, when the electronically controlled brake valve device 48 receives the brake request 106 (e.g. in the form of an electric brake signal), the electronically controlled brake valve device 48 is opened. When the electronically controlled brake valve device 48 is opened it allows pressurized air received in the electronically controlled brake valve device 48 to be passed to a brake chamber 108 of the lift axle. When the electronically controlled brake valve device 48 is closed, pressurized air received in the electronically controlled brake valve device 48 is prevented from being passed to the brake chamber 108. The degree of the opening and/or the duration of the opening of the electronically controlled brake valve device 48 is controlled by the brake request 106 from the foot brake modulator 102.

As can be seen in **FIG. 6****,** the valve 42 is arranged upstream of the electronically controlled brake valve device 48 and downstream of the pressurized air source 46. When the valve 42 is in the illustrated open second state and the electronically controlled brake valve device 48 receives a brake request 106, the pressurized air is allowed to be passed to the brake chamber, all the way from the pressurized air source 46. However, when the valve 42 is in the closed first state (i.e. lift axle is in lifted condition), then the valve 42 blocks pressurized air from reaching the electronically controlled brake valve device 48. In this latter case, there will be no pressurized air supplied from the pressurized air source 46 to the brake chamber 108 even if the electronically controlled brake valve device 48 receives a brake request 106 from the foot brake modulator 102.

**FIG. 6** also illustrates schematically a processing circuitry 110 which is in operative communication with a pressure sensor 112 measuring the pressure of a tire of the lift axle. When the lift axle is in a ride mode, the information 114 received by the processing circuitry 110 from the pressure sensor 112 is such that the processing circuitry 110 does not energize the valve 42 (therefore a control signal arrow from the processing circuitry 110 to the valve 42 is illustrated with a dashed line). Thus, the spring force of the spring device 50 keeps the valve 42 in the open second state shown in **FIG. 6****.** If the lift axle is later lifted, the information 114 received by the processing circuitry 110 will change and the processing circuitry 110 will accordingly energize the valve 42 to move it against the spring force of the spring device 50 so that the valve 42 reaches the closed first state.

It should be understood that in other examples the separate valve 42 may be omitted. In such cases the processing circuitry 110 may instead control the electronically controlled brake valve device 48 independently and may override any brake request 106 from the foot brake modulator 102 when the lift axle is in the lift condition.

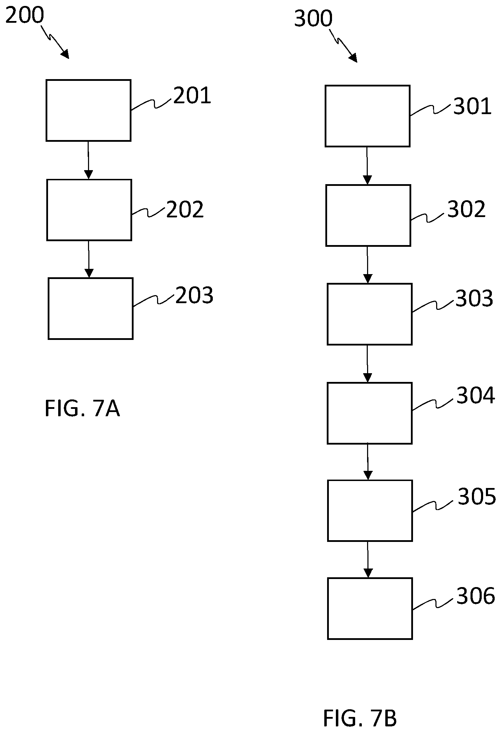

**FIGS. 7A-7B** schematically illustrates methods 200, 300 according to at least some examples of this invention. In particular, **FIG. 7A** schematically illustrates a method 200 of controlling air supply to a brake chamber of a lift axle of a heavy-duty vehicle, the method 200 comprising:
- monitoring, 201, the pressure inside a tire of the lift axle,
- determining, 202, based on the monitored pressure, whether the lift axle is in its raised lift condition or in its lowered ride condition, and
- controlling, 203, upon determination that the lift axle is in its raised lift condition, a valve to be closed so as to prevent pressurized air from being supplied from a pressurized air source to the brake chamber.

**FIG. 7B** schematically illustrates that an example 300 of the method 200 may further comprise:
- receiving, 301, from a pressure sensor, measurement values of the pressure inside a tire of the lift axle, wherein when the lift axle is in a lowered ride condition the measurement values vary in an oscillating manner due to the rotation of the tire,
- determining, 302, a pressure oscillation amplitude based on said received measurement values,
- comparing, 303, the received measurement values with a predefined pressure value,
- comparing, 304, the determined pressure oscillation amplitude with a predefined amplitude value,
- determining, 305, that the lift axle is in its lift condition when the received measurement values are lower than said predefined pressure value simultaneously with the determined pressure oscillation amplitude being lower than the predefined amplitude value, and
- controlling, 306, the valve to be closed upon determination that the lift axle is in its raised lift condition.

The methods discussed in this disclosure, such as the methods 200, 300 discussed in relation to **FIGS. 7A-7B** may suitably be executed by means of a processing circuitry, in particular by means of the processing circuitry of the air supply control arrangement of this invention, including any examples thereof. Furthermore, other examples of the method are included in this invention, such as examples which correspond to actions that have been discussed in connection with various examples of the air supply control arrangement. Those actions may be performed by the processing circuitry when implementing such other examples of the method.

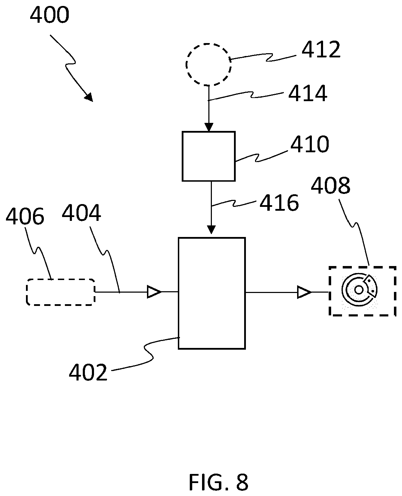

**FIG. 8** schematically illustrates an air supply control arrangement 400 according to at least yet another example of this invention. In particular, **FIG. 8** schematically illustrates an air supply control arrangement 400 for a heavy-duty vehicle comprising a lift axle which comprises a brake chamber, the air supply control arrangement 400 comprising:
- a valve 402 configured to be arranged in an air supply passage 404 that enables pressurized air to be supplied from a pressurized air source 406 to a brake chamber 408 of a lift axle of a heavy-duty vehicle, the valve 402 having a closed first state in which pressurized air along the air supply passage 404 is blocked by the valve 402 and an open second state in which pressurized air is allowed to pass through the valve 402 along the air supply passage 404,
- a processing circuitry 410 configured to receive, from a pressure sensor 412, measurement values 414 of the pressure inside a tire of the lift axle,
wherein the processing circuitry 410 is configured to, based on the received measurement values 414, determine whether the lift axle is in its raised lift condition or in its lowered ride condition, wherein the processing circuitry 410 is configured to control 416 the valve 402 to move to the closed first state upon determination that the lift axle has been raised from its ride condition to its lift condition.

The valve 402 in **FIG. 8** may be an electronically controlled brake valve device, or may represent a separate valve, such as in **FIG. 6****.** The pressure sensor 412, the pressurized air source 406 and the brake chamber 408 have been illustrated with dashed lines, indicating that they do not need to form part of the air supply control arrangement 400 as such. However, in other examples, the air supply control arrangement 400 may, for instance, also comprise the pressure sensor 412 and/or the pressurized air source 406.

The pressure sensor discussed in this disclosure may, for instance, be any suitable pressure sensor used or usable in a TPMS (Tire Pressure Monitoring System). Although the drawings have only been focused on one pressure sensor and one associated tire of the lift axle, it should be understood that the processing circuitry may suitably receive information from a respective pressure sensor of each one of a left tire and a right tire of the lift axle. In such case, if the information from at least one of the pressure sensors indicate that the lift axle is in its ride condition, then the processing circuitry will determine that the lift axle is in its ride condition, and thus allowing normal braking functionality for the lift axle, i.e. allowing pressurized air to be supplied to the respective brake chambers of the lift axle when a brake request has been made.

Furthermore, although the processing circuitry 410 and the valve 402 in **FIG. 8** have functionally been illustrated as two separate components, it should be understood that structurally, they may be integrated as one module. Thus, **FIG. 8** also encompasses examples in which the valve 402 and the processing circuitry 410 form an integrated unit installable as one part of the air supply control arrangement 400.

Furthermore, although a solenoid valve has been illustrated in some of the drawing figures as example for a valve that may be moved between said closed first state and said open second state, it should be understood that this invention is not limited to a solenoid valve. The valve may be implemented in the form of any other suitable control valve which can be set in a closed first state and an open second state.

As has been explained herein, the present invention also relates to a vehicle which comprises an air supply control arrangement, e.g. an air supply control arrangement according to any one of the examples in **FIGS. 4A-4b****,** **6** and **8.** Such a vehicle, may for example be a vehicle like the one in **FIG. 1****,** or it may be another vehicle.

The terminology used herein is for the purpose of describing particular aspects only and is not intended to be limiting of the invention As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention as defined by the appended claims. In the drawings and specification, there have been disclosed aspects for purposes of illustration only and not for purposes of limitation, the scope of the invention being set forth in the following claims.

## Claims

1. An air supply control arrangement for a heavy-duty vehicle comprising a lift axle which comprises a brake chamber, the air supply control arrangement comprising:
- a valve configured to be arranged in an air supply passage that enables pressurized air to be supplied from a pressurized air source to a brake chamber of a lift axle of a heavy-duty vehicle, the valve having a closed first state in which pressurized air along the air supply passage is blocked by the valve and an open second state in which pressurized air is allowed to pass through the valve along the air supply passage,
- a processing circuitry configured to receive, from a pressure sensor, measurement values of the pressure inside a tire of the lift axle,
wherein the processing circuitry is configured to, based on the received measurement values, determine whether the lift axle is in its raised lift condition or in its lowered ride condition, wherein the processing circuitry is configured to control the valve to move to the closed first state upon determination that the lift axle has been raised from its ride condition to its lift condition.

2. The air supply control arrangement according to claim 1, wherein the processing circuitry is further configured to compare the received measurement value with a predefined pressure value, wherein the processing circuitry is configured to control the valve to move to the closed first state upon determination that the lift axle is in a raised lift condition, wherein the processing circuitry is configured to determine that the lift axle is in its lift condition when the received measurement values are lower than said predefined pressure value.

3. The air supply control arrangement according to claim 1, wherein when the lift axle is in a lowered ride condition the measurement values vary in an oscillating manner due to the rotation of the tire, wherein the processing circuitry is configured to determine a pressure oscillation amplitude based on said received measurement values, wherein the processing circuitry is further configured to compare the determined pressure oscillation amplitude with a predefined amplitude value, wherein the processing circuitry is configured to control the valve to move to the closed first state upon determination that the lift axle is in a raised lift condition, wherein the processing circuitry is configured to determine that the lift axle is in its lift condition when the determined pressure oscillation amplitude is lower than the predefined amplitude value.

4. The air supply control arrangement according to claim 1, wherein when the lift axle is in a lowered ride condition the measurement values vary in an oscillating manner due to the rotation of the tire, wherein the processing circuitry is configured to determine a pressure oscillation amplitude based on said received measurement values,
wherein the processing circuitry is further configured to:
• compare the received measurement values with a predefined pressure value, and
• compare the determined pressure oscillation amplitude with a predefined amplitude value,
wherein the processing circuitry is configured to control the valve to move to the closed first state upon determination that the lift axle is in a raised lift condition, wherein the processing circuitry is configured to determine that the lift axle is in its lift condition when the received measurement values are lower than said predefined pressure value simultaneously with the determined pressure oscillation amplitude being lower than the predefined amplitude value.

5. The air supply control arrangement according to any one of claims 1-4, comprising an electronically controlled brake valve device, which when opened allows pressurized air received in the electronically controlled brake valve device to be passed to the brake chamber, and when closed prevents pressurized air received in the electronically controlled brake valve device from being passed to the brake chamber, wherein the degree of the opening and/or the duration of the opening of the electronically controlled brake valve device is controlled by an electronic brake request received by the electronically controlled brake valve device.

6. The air supply control arrangement according to claim 5, wherein said valve forms part of said electronically controlled brake valve device.

7. The air supply control arrangement according to claim 5, further comprising:
- a supply passage,
- a pressurized air source for supplying pressurized air to the electronically controlled brake valve device along said supply passage,
wherein said valve is provided in said supply passage between the pressurized air source and the electronically controlled brake valve device.

8. The air supply control arrangement according to claim 7, further comprising:
- a spring device configured to bias the valve towards said open second state, such that in case of pressure monitoring failure, the valve automatically allows pressurized air to be supplied to the electronically controlled brake valve device.

9. The air supply control arrangement according to any one of claims 1-8, wherein the valve is a solenoid valve actuated by an electronic signal from the processing circuitry.

10. The air supply control arrangement according to any one of claims 1-9, wherein said valve and the processing circuitry form an integrated unit installable as one part of the air supply control arrangement.

11. The air supply control arrangement according to claim 4 or any one of claims 5-10 when dependent on claim 4, wherein the processing circuitry comprises a first switch which is normally open, and a second switch which is normally open, wherein the first switch and second switch are connected in series to the valve, wherein when said measurement values are lower than said predefined pressure value a first voltage signal is generated and closes the first switch, and when the determined pressure oscillation amplitude is lower than the predefined amplitude value a second voltage signal is generated and closes the second switch, wherein when both the first switch and the second switch are closed, the valve is energized and moves to the closed first state.

12. The air supply control arrangement according to any one of claims 1-11, further comprising said pressure sensor, from which the processing circuitry receives said measurement values.

13. A vehicle comprising the air supply control arrangement according to any of claims 1-12.

14. A method of controlling air supply to a brake chamber of a lift axle of a heavy-duty vehicle, the method comprising:
- monitoring the pressure inside a tire of the lift axle,
- determining, based on the monitored pressure, whether the lift axle is in its raised lift condition or in its lowered ride condition, and
- controlling, upon determination that the lift axle is in its raised lift condition, a valve to be closed so as to prevent pressurized air from being supplied from a pressurized air source to the brake chamber.

15. The method according to claim 14, further comprising:
- receiving, from a pressure sensor, measurement values of the pressure inside a tire of the lift axle, wherein when the lift axle is in a lowered ride condition the measurement values vary in an oscillating manner due to the rotation of the tire,
- determining a pressure oscillation amplitude based on said received measurement values,
- comparing the received measurement values with a predefined pressure value,
- comparing the determined pressure oscillation amplitude with a predefined amplitude value,
- determining that the lift axle is in its lift condition when the received measurement values are lower than said predefined pressure value simultaneously with the determined pressure oscillation amplitude being lower than the predefined amplitude value, and
- controlling the valve to be closed upon determination that the lift axle is in its raised lift condition.

## Patentansprüche

1. Luftzufuhrsteuerungsanordnung für ein Schwerlastfahrzeug, das eine Liftachse umfasst, die eine Bremskammer umfasst, wobei die Luftzufuhrsteuerungsanordnung Folgendes umfasst:
- ein Ventil, das dazu konfiguriert ist, in einer Luftzufuhrpassage angeordnet zu sein, die es Druckluft ermöglicht, von einer Druckluftquelle zu einer Bremskammer einer Liftachse eines Schwerlastfahrzeugs zugeführt zu werden, wobei das Ventil einen geschlossenen ersten Zustand, in dem Druckluft entlang der Luftzufuhrpassage durch das Ventil blockiert ist, und einen offenen zweiten Zustand, in dem es zulässig ist, dass Druckluft durch das Ventil entlang der Luftzufuhrpassage strömt, aufweist,
- eine Verarbeitungsschaltung, die dazu konfiguriert ist, Messwerte des Drucks im Innern eines Reifens der Liftachse von einem Drucksensor zu empfangen, wobei die Verarbeitungsschaltung dazu konfiguriert ist, basierend auf den empfangenen Messwerten zu bestimmen, ob sich die Liftachse in ihrem angehobenen Liftzustand oder in ihrem abgesenkten Fahrzustand befindet, wobei die Verarbeitungsschaltung dazu konfiguriert ist, das Ventil so zu steuern, dass es sich bei Bestimmung, dass die Liftachse von ihrem Fahrzustand in ihren Liftzustand angehoben wurde, in den geschlossenen ersten Zustand bewegt.

2. Luftzufuhrsteuerungsanordnung nach Anspruch 1, wobei die Verarbeitungsschaltung ferner dazu konfiguriert ist, den empfangenen Messwert mit einem vordefinierten Druckwert zu vergleichen, wobei die Verarbeitungsschaltung dazu konfiguriert ist, das Ventil so zu steuern, dass es sich bei Bestimmung, dass sich die Liftachse in einem angehobenen Liftzustand befindet, in den geschlossenen ersten Zustand bewegt, wobei die Verarbeitungsschaltung dazu konfiguriert ist, zu bestimmen, dass sich die Liftachse in ihrem Liftzustand befindet, wenn die empfangenen Messwerte niedriger sind, als der vordefinierte Druckwert.

3. Luftzufuhrsteuerungsanordnung nach Anspruch 1, wobei die Messwerte, wenn sich die Liftachse in einem abgesenkten Fahrzustand befindet, aufgrund der Rotation des Reifens oszillierend variieren, wobei die Verarbeitungsschaltung dazu konfiguriert ist, basierend auf den empfangenen Messwerten eine Druckoszillationsamplitude zu bestimmen, wobei die Verarbeitungsschaltung ferner dazu konfiguriert ist, die bestimmte Druckoszillationsamplitude mit einem vordefinierten Amplitudenwert zu vergleichen, wobei die Verarbeitungsschaltung dazu konfiguriert ist, das Ventil so zu steuern, dass es sich bei Bestimmung, dass sich die Liftachse in einem angehobenen Liftzustand befindet, in den geschlossenen ersten Zustand bewegt, wobei die Verarbeitungsschaltung dazu konfiguriert ist, zu bestimmen, dass sich die Liftachse in ihrem Liftzustand befindet, wenn die bestimmte Druckoszillationsamplitude niedriger ist, als der vordefinierte Amplitudenwert.

4. Luftzufuhrsteuerungsanordnung nach Anspruch 1, wobei die Messwerte, wenn sich die Liftachse in einem abgesenkten Fahrzustand befindet, aufgrund der Rotation des Reifens oszillierend variieren, wobei die Verarbeitungsschaltung dazu konfiguriert ist, basierend auf den empfangenen Messwerten eine Druckoszillationsamplitude zu bestimmen, wobei die Verarbeitungsschaltung ferner zu Folgendem konfiguriert ist:
- Vergleichen der empfangenen Messwerte mit einem vordefinierten Druckwert und
- Vergleichen der bestimmten Druckoszillationsamplitude mit einem vordefinierten Amplitudenwert,
wobei die Verarbeitungsschaltung dazu konfiguriert ist, das Ventil so zu steuern, dass es sich bei Bestimmung, dass sich die Liftachse in einem angehobenen Liftzustand befindet, in den geschlossenen ersten Zustand bewegt, wobei die Verarbeitungsschaltung dazu konfiguriert ist, zu bestimmen, dass sich die Liftachse in ihrem Liftzustand befindet, wenn die empfangenen Messwerte niedriger sind, als der vordefinierte Druckwert, wobei die bestimmte Druckoszillationsamplitude gleichzeitig niedriger ist, als der vordefinierte Amplitudenwert.

5. Luftzufuhrsteuerungsanordnung nach einem der Ansprüche 1-4, die eine elektronisch gesteuerte Bremsventileinrichtung umfasst, die es, wenn sie geöffnet ist, zulässt, dass Druckluft, die in der elektronisch gesteuerten Bremsventileinrichtung empfangen wird, zu der Bremskammer strömt, und die, wenn sie geschlossen ist, verhindert, dass Druckluft, die in der elektronisch gesteuerten Bremsventileinrichtung empfangen wird, zu der Bremskammer strömt, wobei der Grad der Öffnung und/oder die Dauer der Öffnung der elektronisch gesteuerten Bremsventileinrichtung von einer elektronischen Bremsanforderung gesteuert wird, die von der elektronisch gesteuerten Bremsventileinrichtung empfangen wird.

6. Luftzufuhrsteuerungsanordnung nach Anspruch 5, wobei das Ventil einen Teil der elektronisch gesteuerten Bremsventileinrichtung darstellt.

7. Luftzufuhrsteuerungsanordnung nach Anspruch 5, ferner umfassend:
- eine Zufuhrpassage,
- eine Druckluftquelle zum Zuführen von Druckluft zu der elektronisch gesteuerten Bremsventileinrichtung entlang der Zufuhrpassage,
wobei das Ventil in der Zufuhrpassage zwischen der Druckluftquelle und der elektronisch gesteuerten Bremsventileinrichtung bereitgestellt ist.

8. Luftzufuhrsteuerungsanordnung nach Anspruch 7, ferner umfassend:
- eine Federeinrichtung, die dazu konfiguriert ist, das Ventil derart in Richtung des offenen zweiten Zustands vorzuspannen, dass das Ventil es im Falle eines Drucküberwachungsausfalls automatisch zulässt, dass der elektronisch gesteuerten Bremsventileinrichtung Druckluft zugeführt wird.

9. Luftzufuhrsteuerungsanordnung nach einem der Ansprüche 1-8, wobei es sich bei dem Ventil um ein Magnetventil handelt, das durch ein elektronisches Signal von der Verarbeitungsschaltung betätigt wird.

10. Luftzufuhrsteuerungsanordnung nach einem der Ansprüche 1-9, wobei das Ventil und die Verarbeitungsschaltung eine integrierte Einheit darstellen, die als ein Teil der Luftzufuhrsteuerungsanordnung installierbar ist.

11. Luftzufuhrsteuerungsanordnung nach Anspruch 4 oder einem der Ansprüche 5-10, wenn sie von Anspruch 4 abhängig sind, wobei die Verarbeitungsschaltung einen ersten Schalter, der normal offen ist, und einen zweiten Schalter, der normal offen ist, beinhaltet, wobei der erste Schalter und der zweite Schalter mit dem Ventil in Reihe geschaltet sind, wobei wenn die Messwerte niedriger sind, als der vordefinierte Druckwert, ein erstes Spannungssignal erzeugt wird und den ersten Schalter schließt, und wenn die vorbestimmte Druckoszillationsamplitude niedriger ist, als der vordefinierte Amplitudenwert, ein zweites Spannungssignal erzeugt wird und den zweiten Schalter schließt, wobei das Ventil eingeschaltet wird und sich in den geschlossenen ersten Zustand bewegt, wenn sowohl der erste Schalter als auch der zweite Schalter geschlossen sind.

12. Luftzufuhrsteuerungsanordnung nach einem der Ansprüche 1-11, ferner umfassend den Drucksensor, von dem die Verarbeitungsschaltung die Messwerte empfängt.

13. Fahrzeug, das die Luftzufuhrsteuerungsanordnung nach einem der Ansprüche 1-12 umfasst.

14. Verfahren zur Steuerung einer Luftzufuhr zu einer Bremskammer einer Liftachse eines Schwerlastfahrzeugs, wobei das Verfahren Folgendes umfasst:
- Überwachen des Drucks im Innern eines Reifens der Liftachse,
- Bestimmen, basierend auf dem überwachten Druck, ob sich die Liftachse in ihrem angehobenen Liftzustand oder in ihrem abgesenkten Fahrzustand befindet, und
- Steuern, bei Bestimmung, dass sich die Liftachse in ihrem angehobenen Liftzustand befindet, eines Ventils, das zu schließen ist, um zu verhindern, dass Druckluft von einer Druckluftquelle zu der Bremskammer zugeführt wird.

15. Verfahren nach Anspruch 14, ferner umfassend:
- Empfangen, von einem Drucksensor, von Messwerten des Drucks im Innern eines Reifens der Liftachse, wobei die Messwerte, wenn sich die Liftachse in einem abgesenkten Fahrzustand befindet, aufgrund der Rotation des Reifens oszillierend variieren,
- Bestimmen einer Druckoszillationsamplitude basierend auf den empfangenen Messwerten,
- Vergleichen der empfangenen Messwerte mit einem vordefinierten Druckwert,
- Vergleichen der bestimmten Druckoszillationsamplitude mit einem vordefinierten Amplitudenwert,
- Bestimmen, dass sich die Liftachse in ihrem Liftzustand befindet, wenn die empfangenen Messwerte niedriger sind, als der vordefinierte Druckwert, wobei die bestimmte Druckoszillationsamplitude gleichzeitig niedriger ist, als der vordefinierte Amplitudenwert, und
- Steuern des Ventils, das bei Bestimmung, dass sich die Liftachse in ihrem angehobenen Liftzustand befindet, zu schließen ist.

## Revendications

1. Agencement de commande d'alimentation en air pour véhicule utilitaire lourd comprenant un essieu relevable qui comprend une chambre de freinage, l'agencement de commande d'alimentation en air comprenant :
- une vanne configurée pour être agencée dans un passage d'alimentation en air permettant l'alimentation en air comprimé à partir d'une source d'air comprimé vers une chambre de freinage d'un essieu relevable d'un véhicule utilitaire lourd, la vanne présente un premier état fermé dans lequel l'air comprimé circulant dans le passage d'alimentation en air est bloqué par la vanne et un second état ouvert dans lequel l'air comprimé peut circuler à travers la vanne le long du passage d'alimentation en air,
- un circuit de traitement configuré pour recevoir, à partir d'un capteur de pression, des valeurs de pression à l'intérieur d'un pneu de l'essieu relevable,
dans lequel le circuit de traitement est configuré pour déterminer, en fonction des valeurs de mesure reçues, si l'essieu relevable est dans un état de levage soulevé ou un état de conduite abaissé,
dans lequel le circuit de traitement est configuré pour commander la vanne de passer au premier état fermé lors de la détermination que l'essieu relevable a été soulevé de son état de conduite à son état de levage.

2. Agencement de commande d'alimentation en air selon la revendication 1, dans lequel le circuit de traitement est en outre configuré pour comparer la valeur de mesure reçue à une valeur de pression prédéfinie, dans lequel le circuit de traitement est configuré pour commander le passage de la vanne au premier état fermé lors de la détermination que l'essieu relevable est dans un état de levage soulevé, dans lequel le circuit de traitement est configuré pour déterminer que l'essieu relevable est dans son état de levage soulevé lorsque les valeurs de mesure reçues sont inférieures à ladite valeur de pression prédéfinie.

3. Agencement de commande d'alimentation en air selon la revendication 1, dans lequel, lorsque l'essieu relevable est dans un état de conduite abaissé, les valeurs de mesure varient de manière oscillatoire en raison de la rotation du pneu, dans lequel le circuit de traitement est configuré pour déterminer une amplitude d'oscillation de pression sur la base desdites valeurs de mesure reçues, dans lequel le circuit de traitement est en outre configuré pour comparer l'amplitude d'oscillation de pression déterminée à une valeur d'amplitude prédéfinie, dans lequel le circuit de traitement est configuré pour commander la vanne afin qu'elle passe au premier état fermé lors de la détermination que l'essieu relevable est dans un état de levage soulevé, dans lequel le circuit de traitement est configuré pour déterminer que l'essieu relevable est dans son état de levage soulevé lorsque l'amplitude d'oscillation de pression déterminée est inférieure à la valeur d'amplitude prédéfinie.

4. Agencement de commande d'alimentation en air selon la revendication 1, dans lequel, lorsque l'essieu relevable est dans un état de conduite abaissé, les valeurs de mesure varient de manière oscillatoire en raison de la rotation du pneu, dans lequel le circuit de traitement est configuré pour déterminer une amplitude d'oscillation de pression en fonction desdites valeurs de mesure reçues,
dans lequel le circuit de traitement est en outre configuré pour :
comparer les valeurs de mesure reçues à une valeur de pression prédéfinie ; et
comparer l'amplitude d'oscillation de pression déterminée à une valeur d'amplitude prédéfinie,
dans lequel e circuit de traitement est configuré pour commander la vanne afin qu'elle passe au premier état fermé lors de la détermination que l'essieu relevable est dans un état de levage soulevé, dans lequel le circuit de traitement est configuré pour déterminer que l'essieu relevable est dans un état de levage soulevé lorsque les valeurs de mesure reçues sont inférieures à ladite valeur de pression prédéfinie simultanément avec l'amplitude d'oscillation de pression déterminée étant inférieure à la valeur d'amplitude prédéfinie.

5. Agencement de commande d'alimentation en air selon l'une quelconque des revendications 1 à 4, comprenant un dispositif de vanne de freinage à commande électronique qui, lorsqu'il est ouvert, permet à l'air comprimé reçu dans le dispositif de vanne de freinage à commande électronique de passer à la chambre de freinage et, lorsqu'il est fermé, empêche l'air comprimé reçu dans le dispositif de vanne de freinage à commande électronique de passer à la chambre de freinage, dans lequel le degré d'ouverture et/ou la durée d'ouverture du dispositif de vanne de freinage à commande électronique sont contrôlés par une demande de freinage électronique reçue par le dispositif de vanne de freinage à commande électronique.

6. Agencement de commande d'alimentation en air selon la revendication 5, dans lequel ladite vanne forme une partie dudit dispositif de vanne de freinage à commande électronique.

7. Agencement de commande d'alimentation en air selon la revendication 5, comprenant en outre :
- un passage d'alimentation ;
- une source d'air comprimé pour alimenter le dispositif de vanne de freinage à commande électronique en air comprimé le long dudit passage d'alimentation,
ladite vanne étant disposée dans ledit passage d'alimentation entre la source d'air comprimé et le dispositif de vanne de freinage à commande électronique.

8. Agencement de commande d'alimentation en air selon la revendication 7, comprenant en outre :
- un dispositif à ressort configuré pour solliciter la vanne vers ledit second état ouvert, de sorte qu'en cas de défaillance du système de surveillance de pression, la vanne autorise automatiquement l'alimentation en air sous pression du dispositif de vanne de freinage à commande électronique.

9. Agencement de commande d'alimentation en air selon l'une quelconque des revendications 1 à 8, dans lequel la vanne est une électrovanne actionnée par un signal électronique provenant du circuit de traitement.

10. Agencement de commande d'alimentation en air selon l'une quelconque des revendications 1 à 9, dans lequel ladite vanne et le circuit de traitement forment une unité intégrée pouvant être installée comme partie intégrante de l'agencement de commande d'alimentation en air.

11. Agencement de commande d'alimentation en air selon la revendication 4 ou l'une quelconque des revendications 5 à 10 lorsqu'elle dépend de la revendication 4, dans lequel le circuit de traitement comprend un premier interrupteur normalement ouvert et un second interrupteur normalement ouvert, les premier et second interrupteurs étant connectés en série à la vanne, dans lequel lorsque lesdites valeurs de mesure sont inférieures à la valeur de pression prédéfinie, un premier signal de tension est généré et ferme le premier interrupteur, et lorsque l'amplitude d'oscillation de pression déterminée est inférieure à la valeur d'amplitude prédéfinie, un second signal de tension est généré et ferme le second interrupteur, dans lequel lorsque les premier et second interrupteurs sont fermés, la vanne est alimentée et passe à son premier état fermé.

12. Agencement de commande d'alimentation en air selon l'une quelconque des revendications 1 à 11, comprenant en outre ledit capteur de pression, duquel le circuit de traitement reçoit lesdites valeurs de mesure.

13. Véhicule comprenant l'agencement de commande d'alimentation en air selon l'une quelconque des revendications 1 à 12.

14. Procédé de commande d'alimentation en air d'une chambre de freinage d'un essieu relevable d'un véhicule utilitaire lourd, comprenant :
- la surveillance de la pression à l'intérieur d'un pneu de l'essieu relevable ;
- la détermination, en fonction de la pression surveillée, si l'essieu relevable dans un état de levage soulevé ou un état de conduite abaissé ; et
- la commande, une fois l'essieu relevable est dans un état de levage soulevé, de la fermeture d'une vanne afin d'empêcher l'alimentation en air comprimé de la chambre de freinage depuis une source d'air comprimé.

15. Procédé selon la revendication 14, comprenant en outre :
- la réception, à partir d'un capteur de pression, de valeurs de mesure de la pression à l'intérieur d'un pneu de l'essieu relevable, les valeurs de mesure variant de manière oscillante en raison de la rotation du pneu lorsque l'essieu relevable est dans un état de conduite abaissé,
- la détermination d'une amplitude d'oscillation de pression sur la base desdites valeurs de mesure reçues,
- la comparaison des valeurs de mesure reçues avec une valeur de pression prédéfinie,
- la comparaison de l'amplitude d'oscillation de pression déterminée avec une valeur d'amplitude prédéfinie,
- la détermination que l'essieu relevable est dans un état de levage soulevé lorsque les valeurs de mesure reçues sont inférieures à ladite valeur de pression prédéfinie simultanément avec l'amplitude d'oscillation de pression déterminée étant inférieure à la valeur d'amplitude prédéfinie, et
- la commande de la vanne pour qu'elle soit fermée lors de la détermination que l'essieu relevable est dans un état de levage soulevé.
